(19) Europäisches Patentamt
European Patent Office
Office européen des brevets

(11) **EP 4 182 703 B1**

(12) **EUROPÄISCHE PATENTSCHRIFT**

(45) Veröffentlichungstag und Bekanntmachung des Hinweises auf die Patenterteilung:
**30.07.2025   Patentblatt 2025/31**

(21) Anmeldenummer: **21734949.7**

(22) Anmeldetag: **24.06.2021**

(51) Internationale Patentklassifikation (IPC):
**G01F 1/667** *(2022.01)*      **G01F 1/66** *(2022.01)*
**G01P 5/24** *(2006.01)*

(52) Gemeinsame Patentklassifikation (CPC):
**G01F 1/667; G01P 5/241; G01P 5/245**

(86) Internationale Anmeldenummer:
**PCT/IB2021/055607**

(87) Internationale Veröffentlichungsnummer:
**WO 2022/013653 (20.01.2022 Gazette 2022/03)**

(54) **DURCHFLUSSMESSGERÄT UND VERFAHREN ZUR MESSUNG DES DURCHFLUSSES EINES FLUIDS**

FLOWMETER AND METHOD FOR MEASURING THE FLOW OF A FLUID

DÉBITMÈTRE ET PROCÉDÉ DE MESURE DU DÉBIT D'UN FLUIDE

(84) Benannte Vertragsstaaten:
**AL AT BE BG CH CY CZ DE DK EE ES FI FR GB GR HR HU IE IS IT LI LT LU LV MC MK MT NL NO PL PT RO RS SE SI SK SM TR**

(30) Priorität: **16.07.2020   EP 20186143**

(43) Veröffentlichungstag der Anmeldung:
**24.05.2023   Patentblatt 2023/21**

(73) Patentinhaber: **Endress+Hauser SICK GmbH+Co. KG**
**01458 Ottendorf-Okrilla (DE)**

(72) Erfinder: **KLEMM, Markus**
**79183 Waldkirch (DE)**

(74) Vertreter: **Manitz Finsterwald**
**Patent- und Rechtsanwaltspartnerschaft mbB**
**Postfach 31 02 20**
**80102 München (DE)**

(56) Entgegenhaltungen:
**EP-B1- 1 413 858      US-A1- 2015 020 608**
**US-B1- 7 845 240      US-B2- 8 146 442**

**Beschreibung**

Die Erfindung betrifft ein Durchflussmessgerät und ein Verfahren zur Messung des Durchflusses eines Fluids auf Ultraschallbasis.

Für die Bestimmung der Fluss- oder Strömungsgeschwindigkeit oder des Durchflusses eines Fluids auf Ultraschallbasis sind unterschiedliche Messprinzipien bekannt.

Bei einem Differenzlaufzeitverfahren wird ein Paar Ultraschallwandler am Außenumfang der Rohrleitung mit einem gegenseitigen Versatz in Längsrichtung montiert, die quer zu der Strömung entlang eines zwischen den Ultraschallwandlern aufgespannten Messpfades wechselseitig Ultraschallsignale aussenden und registrieren. Die durch das Fluid transportierten Ultraschallsignale werden je nach Laufrichtung durch die Strömung beschleunigt oder abgebremst. Die resultierende Laufzeitdifferenz wird mit geometrischen Größen zu einer mittleren Flussgeschwindigkeit des Fluids verrechnet. Mit der Querschnittsfläche ergibt sich daraus der Volumenstrom oder Durchfluss. Für genauere Messungen können auch mehrere Messpfade mit jeweils einem Paar Ultraschallwandler vorgesehen sein, um einen Strömungsquerschnitt an mehr als einem Punkt zu erfassen. Für eine hohe Messgenauigkeit bei unsymmetrischen Geschwindigkeitsverteilungen über dem Strömungsquerschnitt sind mehrere Messpfade erforderlich, die nicht durch die Rohrachse beziehungsweise die Mittelachse der Rohrleitung verlaufen, so genannte nicht-diametrale Messpfade bzw. Sekantenpfade. Insbesondere sind für eine hohe Unempfindlichkeit der Volumenstrommessung gegenüber inhomogenen Strömungsverteilungen weit außermittige Sekantenpfade wünschenswert.

Die zur Erzeugung des Ultraschalls eingesetzten Ultraschallwandler weisen einen Schwingkörper auf, häufig eine Keramik. Mit dessen Hilfe wird beispielsweise auf Basis des piezoelektrischen Effekts ein elektrisches Signal in Ultraschall gewandelt und umgekehrt. Je nach Anwendung arbeitet der Ultraschallwandler als Schallquelle, Schalldetektor oder beides. Dabei muss für eine Kopplung zwischen dem Fluid und dem Ultraschallwandler gesorgt werden. Eine verbreitete Lösung besteht darin, die Ultraschallwandler mit direktem Kontakt zum Fluid in die Leitung hineinragen zu lassen. Solche intrusiven Sonden können genaue Messungen durch Störung der Strömung erschweren. Umgekehrt sind die eintauchenden Ultraschallwandler dem Fluid und dessen Druck und Temperatur ausgesetzt und werden dadurch womöglich beschädigt oder verlieren durch Ablagerungen ihre Funktion.

Grundsätzlich sind auch Techniken bekannt, bei denen die Innenwand vollständig geschlossen bleibt. Ein Beispiel ist die sogenannte Clamp-On-Montage, etwa gemäß US 4 467 659, mit der die Ultraschallwandler von außen an der Leitung befestigt werden. Damit können aber nur diametrale Messpfade durch die Rohrachse realisiert werden, wodurch bei nicht axialsymmetrischen Strömungsprofilen zusätzliche Fehler erzeugt werden.

Eine weitere Ausführung ist in DE 10 2013 101 950 A1 vorgestellt, bei der die Ultraschalleinheiten selbst jeweils aus Gruppen von mehreren Einzelwandlern bestehen. Diese können bei mehrschichtigen Rohrwänden z.B. aus Faserverbundwerkstoffen direkt in die Rohrwandung integriert werden. Das Funktionsprinzip nutzt die Wandlergruppen, um, wie bei klassischen Clamp-On Anordnungen, durch Körperschallwellen gezielt Ultraschall abzustrahlen bzw. zu empfangen. Das hat, wie von sogenannten Clamp-On Konstruktionen bekannt, bei denen die Ultraschallwandler außen auf die Kanalwand montiert sind, den Vorteil, dass die Wandlereinheit nicht in den Strömungskanal hineinragt und somit die Strömung nicht gestört wird und keine Verschmutzungen auftreten können.

Ein weiterer Nachteil bei bekannten intrusiven Sonden tritt bei hohen Flussgeschwindigkeiten auf. Dieser ist anschaulich in EP 2 103 912 A1 in Figuren 3 und 4 dargestellt. Durch den Verwehungseffekt trifft das Ultraschallpaket je nach Flussgeschwindigkeit auf unterschiedliche Stellen auf der gegenüberliegenden Rohrwand und trifft womöglich nicht mehr auf die dort angeordnete Ultraschallwandlereinheit.

Aus Kang et al "Two-dimensional flexural ultrasonic phased array for flow measurement" in 2017 IEEE International Ultrasonics Symposium (IUS), Washington, DC, USA, 6-9 Sep 2017. Published in: 2017 IEEE International: Ultrasonics Symposium (IUS) ISSN 1948-5727, ist bekannt, dem oben genannten Verwehungseffekt durch sogenanntes "phased-array beam steering" zu begegnen. Ein "phased-array" besteht aus einzelnen Ultraschallwandlern, die zusammen in Überlagerung Ultraschallsignale abgeben, deren Abstrahlrichtung durch Änderung der einzelnen Phasen der Einzelsignale änderbar ist. Diese "phased-array" Ultraschallwandlereinheiten werden in Öffnungen eines Strömungskanals eingesetzt.

Nachteilig an den aus dem Stand der Technik bekannten Differenzlaufzeitverfahren ist, dass für jeden Messpfad mindestens zwei Ultraschallwandlereinheiten benötigt werden. Zudem ist eine reziproke Elektronik oder vollständige Symmetrie, also ein exakt gleiches Verhalten der Ultraschallwandlereinheiten und der angeschlossenen Elektronik für Hin- und Rückrichtung notwendig, was die Komplexität der Vorrichtung weiter erhöht.

Weiterhin ist für die Bestimmung der Fluss- oder Strömungsgeschwindigkeit ein Dopplerverfahren bekannt. Hier wird die je nach Flussgeschwindigkeit unterschiedliche Frequenzverschiebung eines innerhalb des strömenden Fluids reflektierten Ultraschallsignals ausgewertet. Dabei wird nur ein die Ultraschallsignale aussendender und empfangender Ultraschallwandler verwendet. Eine Messung ist jedoch nur dann möglich, wenn genügend geeignete Streupartikel im Fluid vorhanden sind, die das Ultraschallsignal reflektieren.

Das Dokument US 2015/0020608 A1 beschreibt ein Durchflussmessgerät mit einer Anordnung von Ultraschallwandlerelementen, die dazu eingerichtet ist, eine erste Unteranordnung der Anordnung von Ultraschallwandlerelementen zu aktivieren, um mindestens zwei ausgehende Ultraschallstrahlen durch ein Fluid zu lenken, und eine zweite Unteranordnung der Anordnung von Ultraschallwandlerelementen zu aktivieren, um die Ultraschallstrahlen nach Durchlaufen eines Messpfades zu detektieren. Allerdings werden nur diametrale, durch eine Rohrmittelachse verlaufende Messpfade offenbart, die eine Messebene aufspannen, in der auch die Rohrmittelachse liegt. Bei nicht axialsymmetrischen Strömungsprofilen ergeben derartige diametrale Messpfade ungenaue Messergebnisse, da das Strömungsprofil nur unzureichend über den Querschnitt erfasst wird.

Ausgehend von diesem Stand der Technik ist es Aufgabe der Erfindung, eine verbesserte Vorrichtung zur Messung der Flussgeschwindigkeit bereitzustellen, die zur Messung von Fluiden geeignet ist, die keine oder nur eine geringe Anzahl von Streupartikeln enthalten, wobei die Vorrichtung eine verminderte technische Komplexität aufweist und bei nicht axialsymmetrischen Strömungsprofilen eine verbesserte Messgenauigkeit liefern kann.

Diese Aufgabe wird gelöst durch ein Durchflussmessgerät mit den Merkmalen des Anspruchs 1 und ein Verfahren zur Messung des Durchflusses eines Fluids mit den Merkmalen des Anspruchs 12.

Das erfindungsgemäße Durchflussmessgerät umfasst

- einen Messaufnehmer der eine Rohrleitung für das Fluid mit einer Rohrwand aufweist,
- wenigstens eine phased-array Ultraschallwandlereinheit, wobei eine phased-array Ultraschallwandlereinheit im Zusammenhang mit dieser Anmeldung Ultraschallwandlereinheiten umfasst, die Ultraschallsignale in verschiedene Winkel abstrahlen und Ultraschallsignale aus verschiedenen Winkeln empfangen können, insbesondere auch Anordnungen von lediglich zwei Ultraschallwandlern,
- eine Steuer- und Auswerteeinheit, die zur Ansteuerung der Ultraschallwandlereinheit zum Aussenden der Ultraschallsignale entlang eines Messpfades, zur Auswertung der empfangenen Ultraschallsignale und zur Bestimmung eines Durchflusses unter Verwendung von Laufzeiten der Ultraschallsignale ausgebildet ist, wobei
- der Messaufnehmer wenigstens einen Reflektor aufweist, der dazu ausgebildet ist, die von der Ultraschallwandlereinheit ausgesendeten Ultraschallsignale zur Ultraschallwandlereinheit zurück zu reflektieren, wobei die Ultraschallsignale den Messpfad von der Ultraschallwandlereinheit zum Reflektor und zurück zur Ultraschallwandlereinheit auf wenigstens drei unterschiedlichen Pfadabschnitten durchlaufen, und der Messpfad ein nicht diametral durch eine Mittelachse der Rohrleitung verlaufender Sekantenpfad ist.

Der besondere Vorteil der Erfindung besteht darin, dass das erfindungsgemäße Durchflussmessgerät zur Bestimmung eines Durchflusses eines Fluids mittels Differenzlaufzeitverfahren lediglich eine Ultraschallwandlereinheit benötigt und auch bei nicht axialsymmetrischen Strömungsprofilen eine verbesserte Messgenauigkeit liefert. Durch den Wegfall der üblicherweise notwendigen zweiten Ultraschallwandlereinheit verringert sich die Komplexität des Durchflussmessgeräts erheblich.

In einer Ausführungsform kann das erfindungsgemäße Durchflussmessgerät so ausgebildet sein, dass die Ultraschallwandlereinheit eine eindimensionale Ultraschallwandlereinheit ist, die ein eindimensionales, lineares Array von Ultraschallwandlern aufweist. Da der Abstrahlwinkel des Ultraschallsignals mit einer eindimensionalen Ultraschallwandlereinheit nur in einer Ebene verändert und das Ultraschallsignal in dieser Ebene abgestrahlt und wieder empfangen werden kann, sind die Ultraschallwandlereinheit und der Reflektor so ausgerichtet, dass die Ultraschallsignale nach Reflexion am Reflektor und der Rohrwand wieder im Wesentlichen in der Ebene auf den Ultraschallwandler treffen, in der sie ausgesendet wurden. "Im Wesentlichen" bedeutet in diesem Fall, dass die eindimensionale Ultraschallwandlereinheit einen Akzeptanzwinkel aufweisen kann, unter dem auch Ultraschallsignale empfangen werden können, die nicht in direkt in der Ebene der ausgesandten Ultraschallsignale auf die Ultraschallwandlereinheit treffen. Ein solcher Akzeptanzwinkel liegt typischerweise im Bereich von +/- 10 Grad zu einer nominellen Sende- und Empfangsebene einer eindimensionalen Ultraschallwandlereinheit, wobei als nominelle Sende- und Empfangsebene, die Ebene bezeichnet ist, in die die Ultraschallsignale ausgesendet werden und in der die Effizienz zum Empfang von Ultraschallsignalen am höchsten ist. Bei einer eindimensionalen Ultraschallwandlereinheit mit zeilenförmiger Anordnung der Ultraschallwandler ist dies in der Regel eine Ebene, die die Ultraschallwandlerzeile und die Abstrahlrichtung der Ultraschallsignale umfasst.

Die Ultraschallsignale werden in einer ersten Messung nach dem Aussenden durch die eindimensionale Ultraschallwandlereinheit zunächst von einem ersten Reflektor reflektiert und treffen auf einen zweiten Reflektor, der die Ultraschallsignale zurück zur Ultraschallwandlereinheit reflektiert. Die Ultraschallsignale durchlaufen also einen Messpfad, der wenigstens drei unterschiedliche Pfadabschnitte aufweist, nämlich von der Ultraschallwandlereinheit zum ersten Reflektor, vom ersten Reflektor zur Rohrwand und von der Rohrwand zurück zur Ultraschallwandlereinheit, wobei der Reflektor und die Ultraschallwandlereinheit so aufeinander abgestimmt und ausgerichtet sind, dass der Messpfad ein Sekantenpfad ist, die Rohmittelachse also nicht in einer durch den Messpfad aufgespannten Ebene liegt, sondern diese lediglich an einem Punkt schneidet. Wie oben beschrieben, kann ein empfangenes Ultraschallsignal in einer nominellen Sende- und Empfangsebene der Ultraschallwandlereinheit liegen oder gegenüber der nominellen Sende- und Empfangsebene einen Winkel aufweisen, der maximal so groß ist wie ein Akzeptanzwinkel der Ultraschallwandlereinheit. Der Messpfad kann auch weitere Pfadabschnitte aufweisen, wobei das Messsignal an weiteren Reflektoren und/oder an der Rohrwand reflektiert werden kann. Wesentlich ist, dass die ausgesendeten und nach Durchlaufen des Messpfades wieder empfangenen Ultraschallsignale im Wesentlichen in einer Ebene liegen.

Zur Differenzmessung ist die Ultraschallwandlereinheit weiterhin ausgebildet, in einer zweiten Messung Ultraschallsignale so auszusenden, dass diese den Messpfad in umgekehrter Richtung durchlaufen, also zunächst von der Ultraschallwandlereinheit zum zweiten Reflektor, vom zweiten Reflektor zum ersten Reflektor und vom ersten Reflektor zurück zur Ultraschallwandlereinheit. Aus der Differenz der in den beiden Messungen bestimmten Laufzeiten der Ultraschallsignale kann die Auswerteeinheit in bekannter Weise eine mittlere Flussgeschwindigkeit des Fluid berechnen.

In einer Weiterbildung dieser Ausführungsform kann das erfindungsgemäße Durchflussmessgerät so ausgebildet sein, dass innerhalb der Messebene eine Vielzahl von Messpfaden realisiert wird, wobei die Ultraschallsignale innerhalb der Messebene in unterschiedlichen Winkeln ausgesendet und empfangen werden können. Bevorzugt kann dann für jeden Messpfad ein Reflektor vorgesehen sein.

Das erfindungsgemäße Durchflussmessgerät kann in einer alternativen Ausführungsform so ausgebildet sein, dass die Ultraschallwandlereinheit eine zweidimensionale Ultraschallwandlereinheit ist, die ein zweidimensionales Array von Ultraschallwandlern aufweist, wobei die einzelnen Ultraschallwandler der Ultraschallwandlereinheit vorzugsweise in Reihen und Spalten angeordnet sein können. Damit ist eine größere Flexibilität bezüglich der möglichen Messpfade gegeben. Insbesondere lassen sich mit einem zweidimensionalen Array als Sekantenpfade ausgebildete Messpfade in unterschiedlichen Messebenen realisieren. Da die Messpfade als Sekantenpfade ausgebildet sind, liegt auch in dieser Ausführungsform die Rohmittelachse nicht in den durch die Messpfade aufgespannten Messebenen, sondern schneidet diese lediglich jeweils an einem Punkt.

Die Ultraschallsignale werden in einer ersten Messung nach dem Aussenden durch die Ultraschallwandlereinheit zunächst wenigstens einmal von der Rohrwand der Rohrleitung reflektiert. Nach ein- oder mehrmaliger Reflexion an der Rohrwand treffen die Ultraschallsignale auf einen Reflektor, der die Ultraschallsignale zurück zur Ultraschallwandlereinheit reflektiert. Die Ultraschallsignale durchlaufen also einen Messpfad, der wenigstens drei unterschiedliche Pfadabschnitte aufweist, nämlich von der Ultraschallwandlereinheit zur Rohrwand, von der Rohrwand zum Reflektor und vom Reflektor zurück zur Ultraschallwandlereinheit. Bei mehr als einer Reflexion an der Rohrwand weist der Messpfad auch Pfadabschnitte von Rohrwand zu Rohrwand auf.

Zur Differenzmessung ist die Ultraschallwandlereinheit weiterhin ausgebildet, in einer zweiten Messung Ultraschallsignale so auszusenden, dass diese den Messpfad in umgekehrter Richtung durchlaufen, also zunächst von der Ultraschallwandlereinheit zum Reflektor, vom Reflektor zur Rohrwand und nach ein- oder mehrmaliger Reflexion an der Rohrwand zurück zur Ultraschallwandlereinheit. Aus der Differenz der in den beiden Messungen bestimmten Laufzeiten der Ultraschallsignale kann die Auswerteeinheit in bekannter Weise eine mittlere Flussgeschwindigkeit des Fluids berechnen.

Bei Ausgestaltung der Ultraschallwandlereinheit als zweidimensionale Ultraschallwandlereinheit kann diese Ultraschallsignale in verschiedenen Messebenen aussenden und empfangen. Dazu kann der Messaufnehmer eine Vielzahl von an oder in der Rohrwand angeordneten Reflektoren aufweisen. Alternativ kann der Messaufnehmer einen bogenförmig in oder an der Rohrwand angeordneten Reflektor aufweisen und die Ultraschallwandlereinheit so angesteuert werden, dass die Ultraschallsignale an verschiedenen Orten auf den bogenförmigen Reflektor treffen. Dadurch können flexibel verschiedene Messpfade verwendet werden. Der Reflektor kann auch kreisförmig ausgeführt sein, also den kompletten inneren Umfang der Rohrwand abdecken, womit sich die Anzahl möglicher Messpfade weiter erhöht.

Besonders vorteilhaft in beiden beschriebenen Ausführungsformen ist, wenn wenigstens für einen Pfadabschnitt gilt, dass das Verhältnis r/R zwischen 0,3 und 0,65 liegt, wobei R der Radius der Rohrleitung ist und r der kürzeste Abstand des Pfadabschnittes zur Mittelachse der Rohrleitung ist. Diese Pfadabschnitte liegen besonders günstig, um die Strömung sinnvoll abzutasten. Sie liegen außermittig in Bezug auf die Rohrachse aber auch nicht zu nahe am Rand. Die Pfade liegen dann auch näherungsweise auf Gaußschen Knoten. Das ist vorteilhaft, denn im Gaußschen Knoten ändert sich das Strömungsprofil nicht mit der Geschwindigkeit des Fluids. Insgesamt ergibt das eine höhere Messgenauigkeit. Zur weiteren Verbesserung der Messgenauigkeit können wenigstens zwei Pfadabschnitte unterschiedliche Werte für das Verhältnis r/R aufweisen.

In einer bevorzugten Ausführung des erfindungsgemäßen Durchflussmessgeräts verläuft der Pfadabschnitt zwischen Ultraschallwandlereinheit und Reflektor unter einem Pfadwinkel von weniger als 20 Grad, besonders bevorzugt weniger als 15 Grad zur Mittellachse der Rohrleitung. Dies hat den Vorteil, dass das Ultraschallsignal in einem Bereich nahe der Rohrwand verläuft und auf diesem Pfadabschnitt geringer vom Durchfluss des Fluids beeinflusst wird als im Bereich der Mittelachse der Rohrleitung, da Strömungsprofile von Fluidströmen in Rohrleitungen in der Regel im Bereich der Rohrwand eine deutlich geringere Flussgeschwindigkeit aufweisen als im Bereich der Mittelachse der Rohrleitung.

Die Ultraschallwandlereinheit kann vorteilhaft in die Rohrwand der Rohrleitung integriert sein. Dadurch wird der Durchfluss des Fluids nicht beeinflusst und unerwünschte Störungen, beispielsweise durch Verwirbelungen werden verhindert.

Der oder die Reflektoren können bevorzugt in Strömungsrichtung nach der Ultraschallwandlereinheit angeordnet sein, so dass diese die Fluidströmung im Bereich zwischen Ultraschallwandlereinheit und Reflektoren nicht beeinflusst.

In einer Ausführungsform der Erfindung können die Ultraschallwandlereinheit und/oder der Reflektor zur Verminderung von Störungen der Fluidströmung in einer Vertiefung der Rohrwand angeordnet sein. Bevorzugt kann bei dieser Ausführungsform die Vertiefung zumindest teilweise verdeckt sein. Besonders bevorzugt sind dann lediglich Öffnungen zum Ein- und Austritt der Ultraschallsignale vorgesehen.

Da die Ultraschallwandlereinheit als phased-array ausgebildet ist, kann sie Ultraschallsignale unter einem ersten Winkel aussenden und unter einem zweiten Winkel, der sich vom ersten Winkel unterscheidet, empfangen. Die Ultraschallwandlereinheit kann dabei so ausgerichtet sein, dass Ultraschallsignale unter einem betragsmäßig gleichen Winkel ausgesendet und nach Durchlaufen des Messpfades wieder empfangen werden. Durch eine solche Symmetrie wird die weitere Verarbeitung der Empfangsdaten vereinfacht.

In einer Ausgestaltung der Erfindung kann die Ultraschallwandlereinheit als lineares Array bestehend aus einer Zeile von wenigstens zwei Ultraschallwandlern ausgebildet sein, deren Ausrichtung parallel zum Messpfad ist. Das ermöglicht, einem Verwehungseffekt über die Ansteuerung der Ultraschallwandler bezüglich ihrer Phase und damit entsprechendes nachführen des Abstrahlwinkels zu begegnen. So können bessere Messergebnisse über einen großen Flussgeschwindigkeitsbereich erfasst werden. Die phased-array Ultraschallwandlereinheit kann dann den Verweheffekt online berücksichtigen und die Richtung der Abstrahlung der Ultraschallpakete der Flussgeschwindigkeit anpassen.

Die Ultraschallwandlereinheit kann auch dazu ausgebildet sein, Ultraschallsignale mit unterschiedlichen Abstrahlwinkeln gleichzeitig auszusenden und die reflektierten Ultraschallsignale gleichzeitig unter verschiedenen Empfangswinkeln zu empfangen, wobei die empfangenen Ultraschallsignale entweder durch digitale Nachverarbeitung voneinander getrennt werden können und somit die Differenzlaufzeit ermittelt werden kann oder die Interferenz der empfangenen Ultraschallsignale ausgewertet werden und aus dem Signalbild die Differenzlaufzeit ermittelt werden kann.

Falls im Fluid eine ausreichende Partikelanzahl vorhanden ist, um die eingangs erwähnte Doppler-Messung zur Bestimmung der Flussgeschwindigkeit durchzuführen, kann das erfindungsgemäße Durchflussmessgerät auch dazu ausgebildet sein, beide Verfahren durchzuführen, um somit eine höhere Genauigkeit bei der Bestimmung der Flussgeschwindigkeit zu erreichen.

Das erfindungsgemäße Verfahren kann auf ähnliche Weise weitergebildet werden und zeigt dabei ähnliche Vorteile. Derartige vorteilhafte Merkmale sind beispielhaft, aber nicht abschließend in den sich an die unabhängigen Ansprüche anschließenden abhängigen Ansprüchen beschrieben

Im Folgenden wird die Erfindung anhand von Ausführungsbeispielen unter Bezugnahme auf die Zeichnung im Einzelnen erläutert. In der Zeichnung zeigen:

Fig. 1          eine schematische Darstellung eines Durchflussmessgeräts;
Fig. 2a         eine schematische Draufsicht einer als zweidimensionales Array ausgeführten Ultraschallwandlereinheit;
Fig. 2b         eine schematische Seitenansicht einer als zweidimensionales Array ausgeführten Ultraschallwandlereinheit;
Fig. 3          eine schematische Darstellung eines erfindungsgemäßen Durchflussmessgeräts;
Fig. 4          eine schematische perspektivische Darstellung eines erfindungsgemäßen Durchflussmessgeräts;
Fig. 5          eine schematische Darstellung einer alternativen Ausführungsform eines erfindungsgemäßen Durchflussmessgeräts zur Mehrpfadmessung;
Fig. 6a - 6c    schematische Darstellungen von Abschirmungen eines Messpfades in einem erfindungsgemäßen Durchflussmessgerät;
Fig. 7          eine schematische Darstellung einer weiteren Ausführungsform des erfindungsgemäßen Durchflussmessgeräts;
Fig. 8          eine schematische Darstellung eines Durchflussmessgeräts nach dem Stand der Technik;

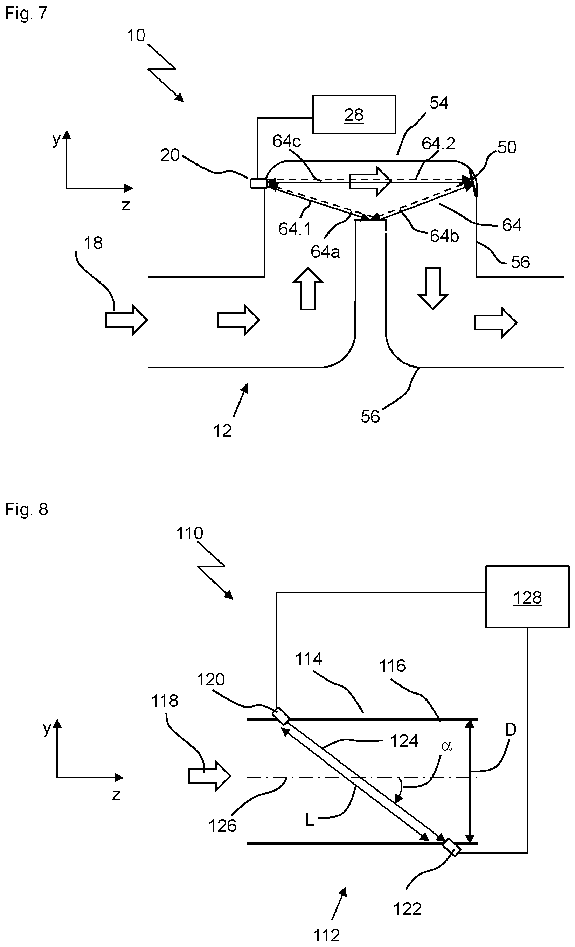

In Fig. 8 ist ein Durchflussmessgerät 110 nach dem Stand der Technik zur allgemeinen Erläuterung der Funktion eines gattungsgemäßen Durchflussmessgeräts dargestellt. Das Durchflussmessgerät 110 umfasst einen Messaufnehmer 112, der eine Rohrleitung 114 für das Fluid 118 mit einer Rohrwand 116 aufweist. Das durch die Rohrleitung 114 strömende Fluid, ein Gas oder eine Flüssigkeit, ist in Fig. 8 mit einem breiten Pfeil dargestellt und strömt in z-Richtung entlang einer Mittelachse 126 der Rohrleitung 114.

Weiter weist das Durchflussmessgerät 110 zwei Ultraschallwandler 120 und 122 auf, die zwischen sich in der Rohrleitung 114 einen Messpfad 124 definieren. Die Ultraschallwandler 120 und 122 sind in Strömungsrichtung z versetzt angeordnet, also in Längsrichtung entlang der Mittelachse 126 der Rohrleitung 114 beabstandet. Dadurch liegt der Messpfad 124 nicht orthogonal zur Strömungsrichtung z, sondern in einem Pfadwinkel $\alpha$. Jede der Ultraschallwandlereinheiten 120 und 122 kann als Sender oder Empfänger arbeiten und wird von einer Steuer- und Auswerteeinheit 128 gesteuert.

Aus dem Pfadwinkel α und dem Rohrdurchmesser D ergibt sich die Länge L des Messpfades 124 im fluiden Medium. Ultraschallsignale, die als Ultraschallwellenpakete auf dem Messpfad 124 in entgegengesetzte Richtungen ausgesandt und empfangen werden, haben also einmal eine Komponente in Richtung der Strömungsrichtung z und ein anders Mal entgegen der Strömungsrichtung z und werden somit mit der Strömung des Fluids 118 beschleunigt bzw. entgegen der Strömung abgebremst. Die mittlere Flussgeschwindigkeit v des Fluids berechnet sich in diesem Laufzeitverfahren nach

$$v = \frac{\frac{t_2 - t_1}{2 * t_2 * t_1} * L}{\cos(\alpha)}$$

worin $t_2$ und $t_1$ die Schalllaufzeiten bezeichnen, die von den abgestrahlten Ultraschallwellensignalen benötigt werden, um den Messpfad 124 stromauf- bzw. stromabwärts zurückzulegen und in der Steuer- und Auswerteeinheit 128 erfasst werden. Mit dem Rohrquerschnitt und der mittleren Flussgeschwindigkeit v des Fluids 118 lässt sich dann der Durchfluss berechnen.

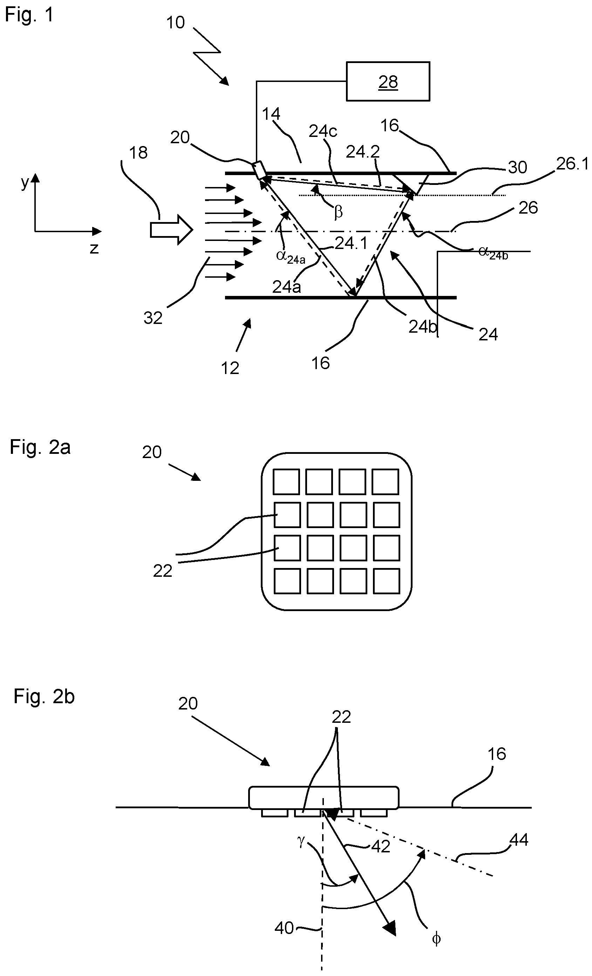

Nach diesem Prinzip arbeitet auch das Durchflussmessgerät 10, das in Fig. 1 sehr schematisch dargestellt ist. Es weist ebenso einen Messaufnehmer 12 mit Rohrleitung 14 und Rohrwand 16 sowie eine Steuer- und Auswerteeinheit 28 auf. Das durch die Rohrleitung 14 strömende Fluid 18, ein Gas oder eine Flüssigkeit, ist mit einem breiten Pfeil dargestellt und strömt in z-Richtung entlang einer Mittelachse 26 der Rohrleitung 14. Das strömende Fluid 18 weist ein Strömungsprofil 32 auf, welches Ultraschallsignale, die sich entlang der Rohrwand 16 ausbreiten, nur wenig beeinflusst, beispielsweise wegen einer niedrigeren Flussgeschwindigkeit des Fluids 18 im Bereich der Rohrwand 16, verglichen mit einer Flussgeschwindigkeit im Bereich der Mittelachse 26.

Im Unterschied zum Durchflussmessgerät 110, aus in Fig. 8 weist die Vorrichtung zur Messung eines Durchflusses eines Fluids in Fig. 1 lediglich eine Ultraschallwandlereinheit 20 in der Rohrwand 16 auf. Die Ultraschallwandlereinheit 20 ist zudem kein "einfacher" Ultraschallwandler, sondern ist als phased-array Ultraschallwandlereinheit 20 ausgebildet. Sie kann als eindimensionales, lineares Array bestehend aus einer Zeile von wenigstens zwei einzeln ansteuerbaren Ultraschallwandlern ausgebildet sein, deren Ausrichtung parallel zum Messpfad 24 ist oder wie in der schematischen Draufsicht der Fig. 2a dargestellt, als zweidimensionales Array von einzeln ansteuerbaren Ultraschallwandlern 22. Die einzelnen Ultraschallwandler 22 werden zum Abstrahlen eines Ultraschallsignals von der Steuer- und Auswerteeinheit 28 so angesteuert, dass sie untereinander jeweils einen Phasenversatz aufweisen, wobei der Phasenversatz so gewählt ist, dass die Überlagerung der daraus resultierenden Ultraschallwellen zu einem Ultraschallwellensignal führt, das die Ultraschallwandlereinheit 20 unter einem Abstrahlwinkel γ senkrecht zu einer Flächennormale 40 der Ultraschallwandlereinheit 20 verlässt, wie in Figur 2b gezeigt, in der das ausgestrahlte Ultraschallwellensignal durch eine durchgezogene Linie 42 dargestellt ist. Die Ultraschallwandlereinheit 20 kann weiterhin so angesteuert werden, dass Ultraschallwellensignale, die unter einem Einfallswinkel φ auf die Ultraschallwandlereinheit 20 treffen (in Figur 2b dargestellt durch die strichpunktierte Linie 44), detektiert werden. Abstrahlwinkel γ und Einfallswinkel φ können sich sowohl vom Betrag als auch in der Richtung unterscheiden. Die Funktionsweise derartiger phased-array Ultraschallwandlereinheiten ist aus dem Stand der Technik bekannt.

In der Fig. 2a ist exemplarisch ein Array von vier mal vier Ultraschallwandlern dargestellt. Diese Beschränkung ist im Wesentlichen dadurch bedingt, dass die Zeichnung einfach und übersichtlich bleiben soll. Wenn 16 solcher einzelner Ultraschallwandler einen zu geringen Signalpegel liefern, kann das Array auch mehr Ultraschallwandler aufweisen. Bevorzugt ist deshalb das Array in nicht dargestellter Weise mit mehr Ultraschallwandlern ausgebildet. Die Anzahl an Ultraschallwandlern ist ein Kompromiss zwischen Signalstärke, Komplexität und Kosten.

Die Ultraschallwandlereinheit 20 sendet und empfängt also Ultraschallsignale, die sich entlang eines Messpfades 24 durch die Rohrleitung 14 bewegen. Wie in Fig. 1 gezeigt, weist der Messpfad 24 dabei mehrere Pfadabschnitte 24a, 24b, 24c auf.

In einer ersten Messung sendet die Ultraschallwandlereinheit 20 die Ultraschallsignale entlang eines ersten Pfadabschnitts 24a des Messpfades 24 von der Ultraschallwandlereinheit 20 zur Rohrwand 16 aus, wobei die Laufrichtung der Ultraschallsignale bei der ersten Messung in der Fig. 1 durch durchgezogene Pfeile 24.1 gekennzeichnet ist. Nach einer Reflexion an der Rohrwand 16 gelangen die Ultraschallsignale entlang eines zweiten Pfadabschnitts 24b von der Rohrwand 16 zu einem Reflektor 30, der die Ultraschallsignale entlang eines dritten Pfadabschnitts 24c zur Ultraschallwandlereinheit 20 zurück reflektiert. Der Reflektor 30 ist in Strömungsrichtung 18 des Fluids stromabwärts, also nach der Ultraschallwandlereinheit 20, an oder in der Rohrwand angeordnet, so dass die Strömung des Fluids im Bereich zwischen Ultraschallwandlereinheit 20 und Reflektor 30 nur wenig bis gar nicht gestört wird, insbesondere, wenn die Ultraschallwandlereinheit 20 bündig in die Rohrwand 16 integriert ist (nicht gezeigt).

In einer zweiten Messung sendet die Ultraschallwandlereinheit 20 die Ultraschallsignale in umgekehrter Laufrichtung, gekennzeichnet durch die gestrichelten Pfeile 24.2, entlang des dritten Pfadabschnitts 24c des Messpfades 24 in Richtung des Reflektors 30 aus. Nach Reflexion am Reflektor 30 gelangen die Ultraschallsignale entlang des zweiten Pfadabschnitts 24b zur Rohrwand 16, von der sie entlang des ersten Pfadabschnitts 24a zur Ultraschallwandlereinheit 20 zurück reflektiert werden.

Die Ultraschallwandlereinheit 20 und der Reflektor 30 sind so angeordnet, dass der dritte Pfadabschnitt 24c des Messpfades 24 zwischen Ultraschallwandlereinheit 20 und Reflektor 30 unter einem Pfadwinkel $\beta$ von weniger als 20 Grad, bevorzugt weniger als 15 Grad zur Mittelachse 26 verläuft, wobei der Pfadwinkel $\beta$ zwischen Mittelachse 26 und drittem Pfadabschnitt 24c hier in Bezug zu einer Parallelen 26.1 der Mittelachse 26 angegeben ist. Der dritte Pfadabschnitt 24c verläuft daher in einem Bereich möglichst nah an der Rohrwand 16. Aufgrund des Strömungsprofils 32 in der Rohrleitung 14, wird das Ultraschallsignal somit auf dem dritten Pfadabschnitt 24c zwischen der Ultraschallwandlereinheit 20 und dem Reflektor 30 von der Fluidströmung nur wenig beeinflusst.

Auf dem ersten Pfadabschnitt 24a zwischen Ultraschallwandlereinheit 20 und Rohrwand 16 und auf dem zweiten Pfadabschnitt 24b zwischen Rohrwand 16 und Reflektor 30 wird das Ultraschallsignal dagegen stark vom Strömungsprofil 32 und der Geschwindigkeit des Fluids in der Rohrleitung beeinflusst. Dadurch ist die Laufzeit der Ultraschallsignale gegen die Flussrichtung, die mit der zweiten Messung gemessen wird (durch gestrichelte Pfeile dargestellter Messpfad), länger als die Laufzeit mit der Flussrichtung, die mit der ersten Messung gemessen wird (durch durchgezogene Pfeile dargestellter Messpfad). Damit ist es möglich, über die Auswertung der Differenzlaufzeit beider Messungen die mittlere Flussgeschwindigkeit des Mediums zu berechnen.

Die mittlere Flussgeschwindigkeit v des Fluids berechnet sich in diesem Laufzeitverfahren nach

$$v = \frac{(L_{24a} + L_{24b} + L_{24c})^2}{2 \cdot (L_{24a} \cos \alpha_{24a} + L_{24b} \cos \alpha_{24b} + C_v L_{24c} \cos \text{ß})} \cdot \frac{t_{24.2} - t_{24.1}}{t_{24.1} t_{24.2}}$$

Dabei bezeichnen

| | |
|---|---|
| $t_{24.1}$ und $t_{24.2}$ | die Schalllaufzeiten, die von den abgestrahlten Ultraschallsignalen benötigt werden, um den Messpfad 24 in der ersten Laufrichtung 24.1 und in umgekehrter Laufrichtung 24.2 zurückzulegen; |
| $L_{24a}$, $L_{24b}$, $L_{24c}$ | die Längen der Pfadabschnitte 24a, 24b, 24c, |
| $\alpha_{24a}$, $\alpha_{24b}$ | die Pfadwinkel des ersten Pfadabschnitts 24a und des zweiten Pfadabschnitts 24b zur Mittelachse 26; |
| $\beta$ | den Pfadwinkel des dritten Pfadabschnitts 24c zur Mittelachse 26; |
| $C_v$ | einen vom Strömungsprofil und damit von der Strömungsgeschwindigkeit abhängigen Korrekturfaktor, der durch Messung, Kalibrierung oder Simulation bestimmt werden kann; |

Mit dem Rohrquerschnitt und der mittleren Flussgeschwindigkeit v des Fluids 18 lässt sich dann der Durchfluss berechnen.

Der Korrekturfaktor $C_v$ lässt sich beispielsweise derart bestimmen, dass in einem Kalibriervorgang bei einer oder mehreren verschiedenen vorgegebenen mittleren Flussgeschwindigkeiten v die Schalllaufzeiten $t_{24.1}$ und $t_{24.2}$ gemessen und der Korrekturfaktor $C_v$ durch Umstellen der obigen Gleichung berechnet wird. Die Messung mehrerer verschiedener Flussgeschwindigkeiten ist dabei bevorzugt, da auch das Strömungsprofil 32 von der Flussgeschwindigkeit abhängig sein kann. Alternativ kann der Korrekturfaktor $C_v$ auch durch fachübliche Simulation der Schalllaufzeiten $t_{24.1}$ und $t_{24.2}$ der Ultraschallsignale unter Berücksichtigung eines ebenfalls fachüblich simulierten, flussgeschwindigkeitabhängigen Strömungsprofils berechnet werden. Der vom Strömungsprofil und damit auch von der Strömungsgeschwindigkeit abhängige Korrekturfaktor $C_v$ kann also als eine Funktion der Schalllaufzeiten $t_{24.1}$ und $t_{24.2}$ angegeben werden.

Da die Ultraschallwandlereinheit 20 als phased-array ausgebildet ist, kann über die Ansteuerung der einzelnen Ultraschallwandler 22 mittels der Steuer- und Auswerteeinheit 28 der Abstrahlwinkel $\gamma$ verändert werden. Dadurch kann einem Verwehungseffekt, insbesondere bei hohen Flussgeschwindigkeiten, entgegengewirkt werden. Der Abstrahlwinkel $\gamma$ kann nämlich so nachgeregelt werden, dass unabhängig von der Flussgeschwindigkeit stets der Reflektor 30 getroffen wird, und die ausgesandten Ultraschallsignale wieder zur Ultraschallwandlereinheit 20 zurück reflektiert werden.

Durch die Ausgestaltung der Ultraschallwandlereinheit 20 als phased-array hängt der Abstrahlwinkel $\gamma$ von der eingestellten Phasenverschiebung der einzelnen Signale und von der Schallgeschwindigkeit im Fluid ab. Die Schallgeschwindigkeit selbst ist abhängig von Umgebungsbedingungen wie Temperatur und Druck. Deshalb ist es vorteilhaft, dass über die Ansteuerung der einzelnen Ultraschallwandler 22 mittels der Steuer- und Auswerteeinheit 28 die Phasendifferenz in Abhängigkeit der Umgebungsbedingungen so angepasst werden kann, dass der Abstrahlwinkel $\gamma$ gleichbleibt, auch wenn die Schallgeschwindigkeit sich ändert. Zur Bestimmung der Umgebungsbedingungen kann eine Umgebungserfassungseinheit (nicht gezeigt) vorgesehen sein, die z.B. Temperatur und/oder Druck in der Rohrleitung 14 erfasst und an die Steuer- und Auswerteeinheit 28 weiterleitet, um die Fluideigenschaften zu überwachen und damit die Schallgeschwindigkeit und Dichte berechnen zu können. Mit diesen Kenntnissen können die Ultraschallwandler 22 besser angesteuert bzw. ausgewertet werden. Die Dichte ist notwendig, um den Massenfluss zu berechnen und kann aus den Eigenschaften des Mediums sowie Temperatur und Druck berechnet werden. Die Schallgeschwindigkeit selbst kann initial bei bekannten Umgebungsbedingungen, ruhendem Fluid und bekannter Länge des Messpfades gemessen werden, indem für beide Laufrichtungen des Ultraschallsignals entlang des Messpfades eine Laufzeit gemessen, daraus eine mittlere Laufzeit bestimmt und die Länge des Messpfades durch die mittlere Laufzeit geteilt wird:

$$c = \frac{L}{\frac{(t_1 + t_2)}{2}}$$

Mit:

c= Schallgeschwindigkeit
L = Länge des Messpfades
$t_1$ = Laufzeit des Ultraschallsignals entlang des Messpfades in erster Richtung
$t_2$ = Laufzeit des Ultraschallsignals entlang des Messpfades in zweiter Richtung

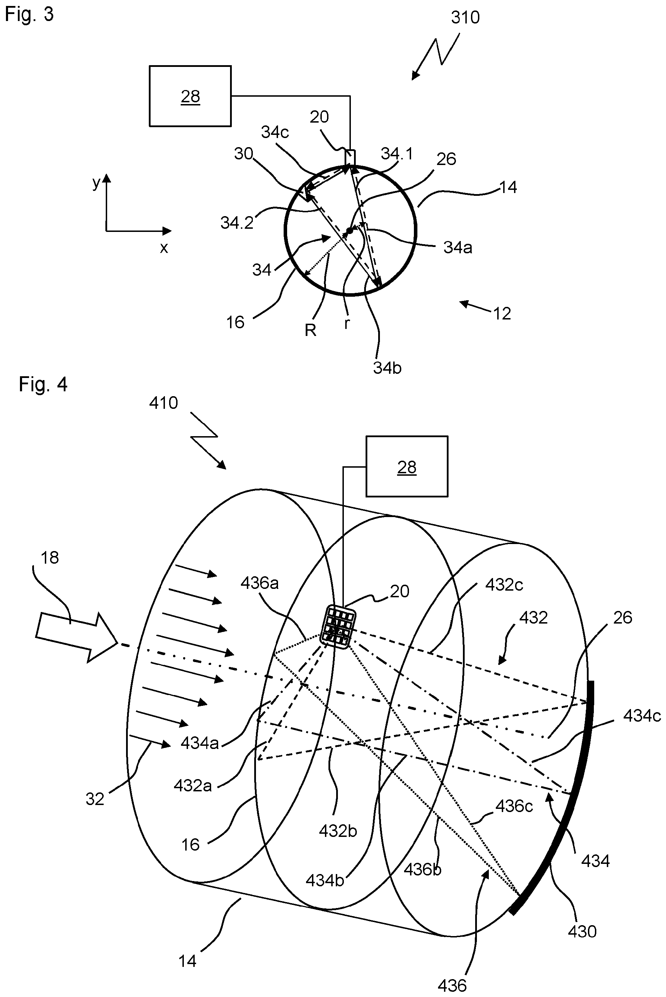

Der Messpfad 24 ist in Fig. 1 als diametraler Messpfad dargestellt, der durch eine Mittelachse 26 der Rohrleitung 14 verläuft. Er kann erfindungsgemäß als Sekantenpfad ausgebildet sein, wie in Fig. 3 gezeigt wird.

Fig. 3 zeigt eine Ausführungsform eines erfindungsgemäßen Durchflussmessgeräts 310, wobei die Rohrleitung 14 in Strömungsrichtung dargestellt ist. Die Ultraschallwandlereinheit 20 sendet Ultraschallsignale auf einem Messpfad 34 aus, der nun nicht diametral durch die Mittelachse 26 der Rohrleitung 14 verläuft, sondern als sogenannter Sekantenpfad mit den Pfadabschnitten 34a, 34b, 34c. Zusätzlich verläuft der Messpfad 34 wie im Beispiel aus Fig. 1 nicht orthogonal zur Strömungsrichtung 18, also aus der Zeichnungsebene heraus oder in die Zeichnungsebene hinein. Die Verwendung von Sekantenpfaden ist vorteilhaft bei unsymmetrischen Geschwindigkeitsverteilungen. Da die Pfadabschnitte 34a, 34b, 34c des Messpfads 34 nicht durch die Mittelachse 26 der Rohrleitung 14 verlaufen, liegt die Mittelachse 26 der Rohrleitung 14 nicht in einer durch die Pfadabschnitte 34a, 34b, 34c des Messpfads 34 aufgespannten Messebene, sondern schneidet diese lediglich an einem Punkt. Damit sind höhere Genauigkeiten bei der Bestimmung der mittleren Flussgeschwindigkeit möglich. Um das Strömungsprofil sinnvoll abzutasten, kann für wenigstens einen Pfadabschnitt gelten, dass das Verhältnis r/R zwischen 0,3 und 0,65 liegt, wobei R der Radius der Rohrleitung ist und r der kürzeste Abstand des Pfadabschnittes zur Mittelachse der Rohrleitung ist, hier gezeigt für den Pfadabschnitt 34a. Bevorzugt kann eine Mehrpfadmessung stattfinden, wobei die Ultraschallwandlereinheit 20 Ultraschallsignale unter verschiedenen Winkeln aussendet, so dass die Ultraschallsignale die Rohrleitung 14 auf unterschiedlichen Messpfaden innerhalb einer Messebene durchlaufen, wobei für jeden Messpfad jeweils ein Reflektor 30 an oder in der Rohrwand angeordnet sein kann.

Fig. 4 zeigt eine perspektivische Ansicht einer Ausführungsform eines erfindungsgemäßen Durchflussmessgeräts 410 mit einer Ultraschallwandlereinheit 20, die ein zweidimensionales Array von einzeln ansteuerbaren Ultraschallwandlern aufweist und Ultraschallsignale in unterschiedlichen Messebenen aussenden und empfangen kann. Es sind beispielhaft drei unterschiedliche Messpfade 432, 434, 436 mit Pfadabschnitten 432a-c, 434a-c, 436a-c dargestellt. Die Messpfade 432, 434, 436 sind Sekantenpfade, die nicht diametral durch die Mittelachse 26 der Rohrleitung 14 verlaufen. Die Mittelachse 26 der Rohrleitung 14 liegt somit nicht in den durch die Messpfade 432, 434, 436 aufgespannten Messebenen, sondern schneidet diese jeweils lediglich an einem Punkt. Der Übersichtlichkeit halber ist die Laufrichtung der Messsignale entlang der Messpfade 432, 434, 436 nicht dargestellt, aber auch hier durchlaufen die Messsignale wie in den vorher gezeigten Beispielen die Messpfade 432, 434, 436 jeweils in beiden Richtungen, also beispielhaft für den Messpfad 432 in einer ersten Messung zunächst entlang Pfadabschnitt 432a von der Ultraschallwandlereinheit 20 zur Rohrwand 16, dann entlang dem Pfadabschnitt 432b zum Reflektor 430 und vom Reflektor 430 entlang dem Pfadabschnitt 432c zurück zur Ultraschallwandlereinheit 20. In einer zweiten Messung wird der Messpfad 432 dann in umgekehrter Richtung durchlaufen, also zunächst entlang Pfadabschnitt 432c von der Ultraschallwandlereinheit 20 zum Reflektor 430, dann entlang dem Pfadabschnitt 432b zur Rohrwand 16 und entlang Pfadabschnitt 432a von der Rohrwand 16 zurück zur Ultraschallwandlereinheit 20.

Anstelle von einzelnen Reflektoren weist dieses Ausführungsbeispiel einen bogenförmig an oder in der Rohrwand angeordneten Reflektor 430 auf. Da die Ultraschallwandlereinheit 20 als zweidimensionale Ultraschallwandlereinheit ausgestaltet ist, kann diese Ultraschallsignale in verschiedenen Messebenen aussenden und empfangen und so angesteuert werden, dass die Ultraschallsignale an verschiedenen Orten auf den Reflektor 430 treffen. Dadurch können flexibel verschiedene Messpfade und/oder Messebenen verwendet werden. Der Reflektor 430 kann auch kreisförmig ausgeführt sein, also den kompletten inneren Umfang der Rohrwand abdecken, womit sich die Anzahl möglicher Messpfade weiter erhöht.

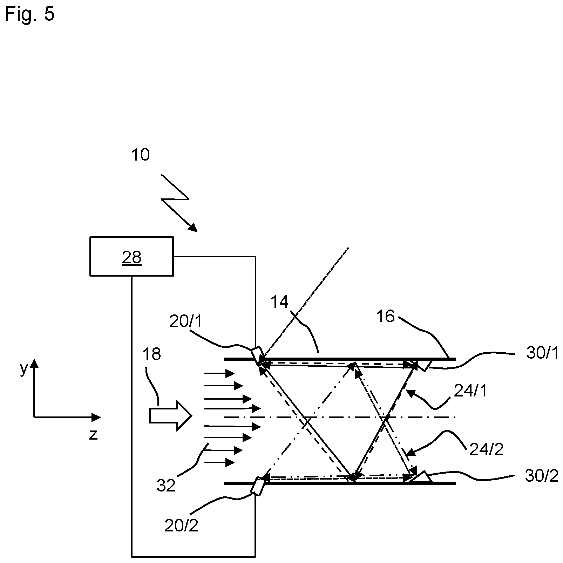

Grundsätzlich ist für eine Mehrpfadmessung auch die Verwendung mehrerer Ultraschallwandlereinheiten möglich wie in Fig. 5 gezeigt. Zusätzlich zu einer ersten Ultraschallwandlereinheit 20/1, die Ultraschallsignale entlang eines Messpfades 24/1 aussendet und empfängt, wobei die Ultraschallsignale an einem ersten Reflektor 30/1 reflektiert werden, weist das Durchflussmessgerät 10 eine zweite Ultraschallwandlereinheit 20/2 auf, die Ultraschallsignale entlang eines zweiten Messpfades 24/2 aussendet und empfängt, wobei die Ultraschallsignale an einem zweiten Reflektor 30/2 reflektiert werden. Je nach Genauigkeitsanforderung an die Durchflussmessung kann eine Vielzahl von N Ultraschallwandlereinheiten verwendet werden, die N Messpfade aufspannen. Anstelle von N Reflektoren kann dann beispielsweise auch ein Reflektor vorgesehen sein, der als umlaufende Erhebung oder Nut der Rohrwand 16 ausgebildet ist.

In den in Fig. 3 und Fig. 4 gezeigten Ausführungsbeispielen erfolgt jeweils eine einfache Reflexion der Ultraschallsignale an der Rohrwand 16. Zur weiteren Erhöhung der Messgenauigkeit, können die Messpfade 34, 432, 434, 436 auch so ausgelegt sein, dass die Ultraschallsignale zwischen Ultraschallwandlereinheit 20 und Reflektor 30, 430 mehrfach an der Rohrwand 16 reflektiert werden. Bevorzugt verlaufen die Pfadabschnitte 34c, 423c, 434c, 436c, auf denen die Ultraschallsignale direkt, also ohne Reflexion an der Rohrwand 16 vom Reflektor 30, 430 zur Ultraschallwandlereinheit 20 gelangen (oder in umgekehrter Laufrichtung von der Ultraschallwandlereinheit 20 direkt zum Reflektor) wie oben erläutert, in einem Bereich nahe an der Rohrwand 16.

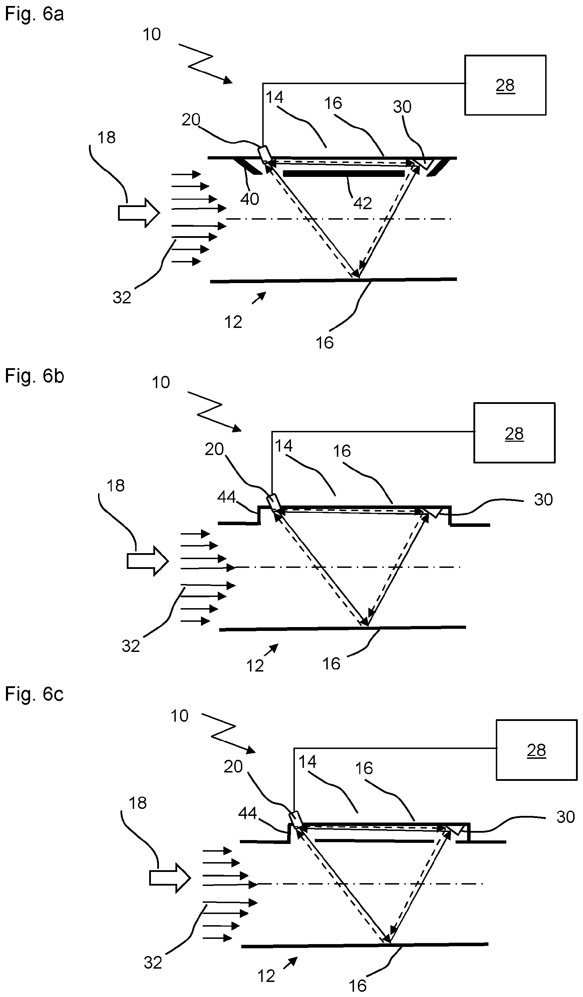

Zur weiteren Verminderung des Einflusses der Fluidströmung auf die direkt zwischen Ultraschallwandlereinheit 20 und Reflektor 30 verlaufenden Ultraschallsignale können diese durch verschiedene Ausführungen vom Fluidstrom abgeschirmt werden, die in den folgenden Figuren 6a - 6c gezeigt sind.

Fig. 6a zeigt eine mechanische Abschirmung 40, 42, die den Bereich zwischen Ultraschallwandlereinheit 20 und Reflektor 30 im Wesentlichen einhaust, und lediglich Öffnungen zum Ein- und Austritt der Ultraschallsignale aufweist.

Fig. 6b zeigt eine alternative Ausführung, bei der die Ultraschallwandlereinheit 20 und der Reflektor 30 in einer Vertiefung 44 der Rohrwand angeordnet sind.

Zur weiteren Abschirmung kann die Vertiefung 44 wie in Figur 5c gezeigt bis auf Öffnungen zum Ein- und Austritt der Ultraschallsignale verschlossen sein, vergleichbar zum Ausführungsbeispiel in Fig. 5a. Die Einbuchtung 44 kann auch als ein an eine Öffnung in der Rohrwand 16 anflanschbares, die Ultraschallwandlereinheit 20 und den Reflektor 30 beinhaltendes Messmodul ausgelegt sein.

Eine weitere, alternative Ausführungsform der Erfindung zeigt Fig. 7. Die Ultraschallwandlereinheit 20 sendet und empfängt Ultraschallsignale, die sich entlang eines Messpfades 64 durch die Rohrleitung 54 bewegen. Wie in den vorherigen Ausführungsbeispielen, weist der Messpfad 64 dabei mehrere Pfadabschnitte 64a, 64b, 64c auf.

Im Unterschied zu den Ausführungsbeispielen in Fig. 3 wird der Reflektor 60 zum Zurückreflektieren der Ultraschallsignale durch die Rohrwand 56 der Rohrleitung 54 selbst gebildet. Die Rohrleitung 54 weist dabei eine u-förmige Windung auf.

In einer ersten Messung sendet die Ultraschallwandlereinheit 20 die Ultraschallsignale entlang eines ersten Pfadabschnitts 64a des Messpfades 64 aus, wobei die Laufrichtung der Ultraschallsignale bei der ersten Messung durch durchgezogene Pfeile 64.1 gekennzeichnet ist. Nach einer Reflexion an der Rohrwand 56 gelangen die Ultraschallsignale entlang eines zweiten Pfadabschnitts 64b zu einem Reflektor 60, der durch die Rohrwand 56 gebildet wird und die Ultraschallsignale entlang eines dritten Pfadabschnitts 64c zur Ultraschallwandlereinheit 20 zurück reflektiert.

In einer zweiten Messung, sendet die Ultraschallwandlereinheit 20 die Ultraschallsignale in umgekehrter Laufrichtung, gekennzeichnet durch die gestrichelten Pfeile 64.2, entlang des dritten Pfadabschnitts 64c des Messpfades 64 in Richtung des Reflektors 60 aus. Nach Reflexion am Reflektor 60 gelangen die Ultraschallsignale entlang des zweiten Pfadabschnitts 64b zur Rohrwand 56, von der sie entlang des ersten Pfadabschnitts 64a zur Ultraschallwandlereinheit 20 zurück reflektiert werden.

Durch die u-förmige Geometrie der Rohrleitung 54 läuft der Messpfad 64 so durch das Fluid 18, dass der dritte Pfadabschnitt 64c im Wesentlichen parallel zur Strömung des Fluids 18 verläuft, während die anderen beiden Pfadabschnitte 64a, 64b im Wesentlichen senkrecht zur Strömung des Fluids 18 verlaufen. Somit wird die Ausbreitungsgeschwindigkeit der Ultraschallsignale auf den ersten und zweiten Pfadabschnitten 64a, 64b nur wenig von der Fluidströmung beeinflusst.

Auf dem dritten Pfadabschnitt 64c zwischen Ultraschallwandlereinheit 20 und Reflektor 60 wird das Ultraschallsignal stark von der Fluidströmung und der Geschwindigkeit des Fluids in der Rohrleitung 54 beeinflusst. Dadurch ist die Laufzeit der Ultraschallsignale gegen die Flussrichtung, die mit der zweiten Messung gemessen wird (durch gestrichelte Pfeile dargestellter Messpfad), länger als die Laufzeit mit der Flussrichtung, die mit der ersten Messung gemessen wird (durch durchgezogene Pfeile dargestellter Messpfad). Damit ist es auch mit dieser Ausführungsform der Erfindung möglich, über die Auswertung der Differenzlaufzeit beider Messungen die mittlere Flussgeschwindigkeit des Fluids 18 zu berechnen.

**Patentansprüche**

1. Vorrichtung zur Messung eines Durchflusses eines Fluids (18) mit

- einem Messaufnehmer (12), der eine Rohrleitung (14) für das Fluid (18) mit einer Rohrwand (16) aufweist,
- wenigstens einer phased-array Ultraschallwandlereinheit (20), die Ultraschallsignale in verschiedene Abstrahlwinkel (γ) abstrahlen und Ultraschallsignale aus verschiedenen Empfangswinkeln (φ) empfangen kann
- einer Steuer- und Auswerteeinheit (28), die zur Ansteuerung der Ultraschallwandlereinheit (20) zum Aussenden der Ultraschallsignale entlang eines Messpfades (34, 432, 434, 436, 64) und zur Auswertung der empfangenen Ultraschallsignale und Bestimmung eines Durchflusses unter Verwendung von Laufzeiten der Ultraschallsignale ausgebildet ist,
- wobei der Messaufnehmer (12) wenigstens einen Reflektor (30, 430, 50) aufweist, der dazu ausgebildet ist, die von der Ultraschallwandlereinheit (20) ausgesendeten Ultraschallsignale zur selben Ultraschallwandlereinheit (20) zurück zu reflektieren, wobei die Ultraschallsignale den Messpfad (34, 432, 434, 436, 64) von der Ultraschallwandlereinheit (20) zum Reflektor (30, , 50) und zurück zur Ultraschallwandlereinheit (20) auf wenigstens drei unterschiedlichen Pfadabschnitten (34a-c, 432a-c, 434a-c, 436a-c, 64a-c) durchlaufen,

**dadurch gekennzeichnet,**

**dass** der Messpfad (34, 432, 434, 436, 64) ein nicht diametral durch eine Mittelachse (26) der Rohrleitung (14) verlaufender Sekantenpfad ist.

2. Vorrichtung nach Anspruch 1, **dadurch gekennzeichnet, dass** die Steuer- und Auswerteeinheit (28) dazu ausgebildet ist, die Ultraschallwandlereinheit (20) derart anzusteuern, dass die Ultraschallsignale in einer ersten Laufzeitmessung den Messpfad (34, 64) in einer ersten Richtung (34.1, 64.1) und in einer zweiten Laufzeitmessung in einer der ersten Richtung entgegengesetzten zweiten Richtung (34.2, 64.2) durchlaufen, und aus einer Differenz der Laufzeitmessungen eine mittlere Flussgeschwindigkeit (v) des Fluids (18) zu bestimmen.

3. Vorrichtung nach einem der vorhergehenden Ansprüche, **dadurch gekennzeichnet, dass** die Ultraschallwandlereinheit (20) in der Rohrwand (16) integriert ist.

4. Vorrichtung nach einem der vorhergehenden Ansprüche, **dadurch gekennzeichnet, dass** die Ultraschallwandlereinheit (20) als zweidimensionales Array von Ultraschallwandlern (22) ausgebildet ist

5. Vorrichtung nach einem der Ansprüche 1 bis 3, **dadurch gekennzeichnet, dass** die Ultraschallwandlereinheit (20) als eindimensionales Array ausgebildet ist, wobei ein empfangenes Ultraschallsignal gegenüber einer nominellen Sende- und Empfangsebene der Ultraschallwandlereinheit (20) einen Winkel aufweist, der maximal so groß ist wie ein Akzeptanzwinkel der Ultraschallwandlereinheit (20).

6. Vorrichtung nach Anspruch 5, wobei ein Betrag des Akzeptanzwinkels kleiner als 10 Grad ist.

7. Vorrichtung nach einem der vorhergehenden Ansprüche, **dadurch gekennzeichnet, dass** ein zwischen Reflektor (30) und Ultraschallwandlereinheit (20) liegender Pfadabschnitt (34c, 432c, 434c, 436c,) des Messpfades (34, 432, 434, 436) unter einem Pfadwinkel (β) von weniger als 20 Grad, bevorzugt weniger als 15 Grad, zur Mittelachse (26) der Rohrleitung (14) verläuft.

8. Vorrichtung nach einem der vorhergehenden Ansprüche, **dadurch gekennzeichnet, dass** die Ultraschallwandlereinheit (20) so ausgerichtet ist, dass die Ultraschallsignale unter betragsmäßig gleichen Abstrahlwinkeln (γ) und Einfallswinkeln (φ) ausgesendet und nach Durchlaufen des Messpfades (34, 432, 434, 436) wieder empfangen werden.

9. Vorrichtung nach einem der vorhergehenden Ansprüche, **dadurch gekennzeichnet, dass** die Steuer- und Auswerteeinheit (28) dazu ausgebildet ist, die Ultraschallwandlereinheit zum Nachführen des Abstrahlwinkels (γ) in Abhängigkeit der mittleren Flussgeschwindigkeit (v) des Fluids (18) anzusteuern.

10. Vorrichtung nach einem der vorhergehenden Ansprüche, **dadurch gekennzeichnet, dass** für wenigstens einen Pfadabschnitt (34a-c) gilt, dass ein Verhältnis r/R zwischen 0,3 und 0,65 liegt, wobei R der Radius (R) der Rohrleitung (14) und r der kürzeste Abstand (r) des Pfadabschnitts (34a-c) zur Mittelachse (26) der Rohrleitung (14) ist.

11. Vorrichtung nach Anspruch 10, **dadurch gekennzeichnet, dass** wenigstens zwei Pfadabschnitte (34a-c) ein unterschiedliches Verhältnis r/R aufweisen.

12. Verfahren zur Messung eines Durchflusses eines in einer Rohrleitung (14) strömenden Fluids (18) mit den Schritten:

- Aussenden von Ultraschallsignalen entlang eines Messpfades (24, 34, 64) in der Rohrleitung (14) mit einer von einer Steuer- und Auswerteeinheit (28) angesteuerten phased-array Ultraschallwandlereinheit (20)
- Empfangen der ausgesendeten Ultraschalsignale mit derselben Ultraschallwandlereinheit (20) nach Durchlaufen des Messpfades (24, 34. 64).
- Auswerten der empfangenen Ultraschallsignale und Bestimmen eines Durchflusses des Fluids (18) unter Verwendung von Laufzeiten der Ultraschallsignale mit der Steuer- und Auswerteeinheit (28)
- wobei die von der Ultraschallwandlereinheit (20) ausgesendeten Ultraschallsignale von wenigstens einem Reflektor (30) zur Ultraschallwandlereinheit (20) zurück reflektiert werden, wobei die Ultraschallsignale den Messpfad (34, 432, 434, 436, 64) von der Ultraschallwandlereinheit (20) zum Reflektor (30, 430, 50) und zurück zur Ultraschallwandlereinheit (20) auf wenigstens drei unterschiedlichen Pfadabschnitten ( 34a-c, 432a-c, 434a-c, 436a-c, 64a-cc) durchlaufen,

**dadurch gekennzeichnet,**
**dass** der Messpfad (34, 432, 434, 436,) ein nicht diametral durch eine Mittelachse (26) der Rohrleitung (14) verlaufender Sekantenpfad ist.

13. Verfahren nach Anspruch 12, **gekennzeichnet durch** die weiteren Schritte:

- Aussenden der Ultraschallsignale in einer ersten Messung derart, dass die Ultraschallsignale in einer ersten Laufzeitmessung den Messpfad (34, 64) in einer ersten Richtung (34.1, 64.1) und in einer zweiten Laufzeitmessung in einer der ersten Richtung entgegengesetzten zweiten Richtung (34.2, 64.2) durchlaufen, und
- Bestimmen einer mittleren Flussgeschwindigkeit (v) des Fluids (18) aus einer Differenz der ersten und der zweiten Laufzeitmessung.

## Claims

1. A device for measuring a flow of a fluid (18), comprising

- a sensing element (12) which has a pipeline (14) for the fluid (18) having a pipe wall (16),
- at least one phased array ultrasonic transducer unit (20) which can emit ultrasonic signals into different emission angles ($\gamma$) and can receive ultrasonic signals from different reception angles ($\phi$),
- a control and evaluation unit (28) which is configured for controlling the ultrasonic transducer unit (20) for emitting the ultrasonic signals along a measurement path (34, 432, 434, 436, 64) and for evaluating the received ultrasonic signals and determining a flow using transit times of the ultrasonic signals,
- wherein the sensing element (12) has at least one reflector (30, 430, 50) which is configured to reflect the ultrasonic signals emitted by the ultrasonic transducer unit (20) back to the same ultrasonic transducer unit (20), wherein the ultrasonic signals pass through the measurement path (34, 432, 434, 436, 64) from the ultrasonic transducer unit (20) to the reflector (30, 50) and back to the ultrasonic transducer unit (20) on at least three different path sections (34a-c, 432a-c, 434a-c, 436a-c, 64a-c),

**characterized in that**
the measurement path (34, 432, 434, 436, 64) is a secant path which does not extend diametrically through a center axis (26) of the pipeline (14).

2. A device according to claim 1, **characterized in that** the control and evaluation unit (28) is configured to control the ultrasonic transducer unit (20) such that the ultrasonic signals in a first transit time measurement pass through the measurement path (34, 64) in a first direction (34.1, 64.1) and in a second transit time measurement in a second direction (34.2, 64.2) opposite to the first direction, and to determine a mean flow rate (v) of the fluid (18) from a difference in the transit time measurements.

3. A device according to one of the preceding claims, **characterized in that** the ultrasonic transducer unit (20) is integrated in the pipe wall (16).

4. A device according to any one of the preceding claims, **characterized in that** the ultrasonic transducer unit (20) is configured as a two-dimensional array of ultrasonic transducers (22).

5. A device according to any one of the claims 1 to 3, **characterized in that** the ultrasonic transducer unit (20) is configured as a one-dimensional array, wherein a received ultrasonic signal has an angle with respect to a nominal transmitting and receiving plane of the ultrasonic transducer unit (20) that is at most as large as an acceptance angle of the ultrasonic transducer unit (20).

6. A device according to claim 5, wherein a magnitude of the acceptance angle is less than 10 degrees.

7. A device according to any one of the preceding claims, **characterized in that** a path section (34c, 432c, 434c, 436c) of the measurement path (34, 432, 434, 436) lying between the reflector (30) and the ultrasonic transducer unit (20) extends at a path angle ($\beta$) of less than 20 degrees, preferably less than 15 degrees, to the center axis (26) of the pipeline (14).

8. A device according to any one of the preceding claims, **characterized in that** the ultrasonic transducer unit (20) is oriented such that the ultrasonic signals are emitted at emission angles ($\gamma$) and incidence angles ($\phi$) that are equal in magnitude and are received again after passing through the measurement path (34, 432, 434, 436).

9. A device according to any one of the preceding claims, **characterized in that** the control and evaluation unit (28) is configured to control the ultrasonic transducer unit for tracking the emission angle ($\gamma$) as a function of the mean flow rate (v) of the fluid (18).

10. A device according to any one of the preceding claims, **characterized in that**, for at least one path section (34a-c), it applies that a ratio r/R is between 0.3 and 0.65, wherein R is the radius (R) of the pipeline (14) and r is the shortest distance (r) of the path section (34a-c) to the center axis (26) of the pipeline (14).

11. A device according to claim 10, **characterized in that** at least two path sections (34a-c) have a different ratio r/R.

12. A method for measuring a flow of a fluid (18) flowing in a pipeline (14), comprising the steps:

    - emitting ultrasonic signals along a measurement path (24, 34, 64) in the pipeline (14) with a phased array ultrasonic transducer unit (20) controlled by a control and evaluation unit (28),
    - receiving the emitted ultrasonic signals with the same ultrasonic transducer unit (20) after passing through the measurement path (24, 34, 64),
    - evaluating the received ultrasonic signals and determining a flow of the fluid (18) using transit times of the ultrasonic signals with the control and evaluation unit (28),
    - wherein the ultrasonic signals emitted by the ultrasonic transducer unit (20) are reflected back by at least one reflector (30) to the ultrasonic transducer unit (20), wherein the ultrasonic signals pass through the measurement path (34, 432, 434, 436, 64) from the ultrasonic transducer unit (20) to the reflector (30, 430, 50) and back to the ultrasonic transducer unit (20) on at least three different path sections (34a-c, 432a-c, 434a-c, 436a-c, 64a-cc),

    **characterized in that**
    the measurement path (34, 432, 434, 436) is a secant path which does not extend diametrically through a center axis (26) of the pipeline (14).

13. A device according to claim 12, **characterized by** the further steps:

    - emitting the ultrasonic signals in a first measurement such that the ultrasonic signals pass through the measurement path (34, 64) in a first transit time measurement time in a first direction (34.1, 64.1) and in a second transit time measurement in a second direction (34.2, 64.2) opposite to the first direction, and
    - determining a mean flow rate (v) of the fluid (18) from a difference of the first and second transit time measurement.

**Revendications**

1. Dispositif de mesure d'un débit d'un fluide (18), comprenant

    - un capteur de mesure (12) qui comprend une conduite tubulaire (14), présentant une paroi tubulaire (16), pour le fluide (18),
    - au moins une unité de transducteur d'ultrasons à réseau à commande de phases (20) qui est apte à émettre des signaux ultrasonores selon différents angles d'émission (γ) et à recevoir des signaux ultrasonores à partir de différents angles de réception (φ),
- une unité de commande et d'évaluation (28) conçue pour commander l'unité de transducteur d'ultrasons (20) afin d'émettre les signaux ultrasonores le long d'un trajet de mesure (34, 432, 434, 436, 64) et pour évaluer les signaux ultrasonores reçus et déterminer un débit en utilisant les temps de parcours des signaux ultrasonores,
- le capteur de mesure (12) comprenant au moins un réflecteur (30, 430, 50) conçu pour réfléchir les signaux ultrasonores, émis par l'unité de transducteur d'ultrasons (20), en retour vers la même unité de transducteur d'ultrasons (20), les signaux ultrasonores suivant le trajet de mesure (34, 432, 434, 436, 64) de l'unité de transducteur d'ultrasons (20) vers le réflecteur (30, 50) et en retour vers l'unité de transducteur d'ultrasons (20) sur au moins trois sections de trajet différentes (34a-c, 432a-c, 434a-c, 436a-c, 64a-c),

**caractérisé en ce que** le trajet de mesure (34, 432, 434, 436, 64) est un trajet sécant ne passant pas diamétralement par un axe central (26) de la conduite tubulaire (14).

2. Dispositif selon la revendication 1,
**caractérisé en ce que** l'unité de commande et d'évaluation (28) est conçue pour commander l'unité de transducteur d'ultrasons (20) de telle sorte que les signaux ultrasonores parcourent le trajet de mesure (34, 64) dans une première direction (34.1, 64.1) lors d'une première mesure de temps de parcours et dans une deuxième direction (34.2, 64.2), opposée à la première direction, lors d'une deuxième mesure de temps de parcours, et pour déterminer une vitesse d'écoulement moyenne (v) du fluide (18) à partir d'une différence des mesures de temps de parcours.

3. Dispositif selon l'une des revendications précédentes,
**caractérisé en ce que** l'unité de transducteur d'ultrasons (20) est intégrée dans la paroi tubulaire (16).

4. Dispositif selon l'une des revendications précédentes,
**caractérisé en ce que** l'unité de transducteur d'ultrasons (20) est conçue comme un réseau bidimensionnel de transducteurs d'ultrasons (22).

5. Dispositif selon l'une des revendications 1 à 3,
**caractérisé en ce que** l'unité de transducteur d'ultrasons (20) est conçue comme un réseau unidimensionnel, un signal ultrasonore reçu présentant, par rapport à un plan nominal d'émission et de réception de l'unité de transducteur d'ultrasons (20), un angle qui est au maximum aussi grand qu'un angle d'admission de l'unité de transducteur d'ultrasons (20).

6. Dispositif selon la revendication 5,
dans lequel une valeur absolue de l'angle d'admission est inférieure à 10 degrés.

7. Dispositif selon l'une des revendications précédentes,
**caractérisé en ce qu'**une section de trajet (34c, 432c, 434c, 436c) du trajet de mesure (34, 432, 434, 434, 436), située entre le réflecteur (30) et l'unité de transducteur d'ultrasons (20), s'étend selon un angle de trajet (β) de moins de 20 degrés, de préférence de moins de 15 degrés, par rapport à l'axe central (26) de la conduite tubulaire (14).

8. Dispositif selon l'une des revendications précédentes,
**caractérisé en ce que** l'unité de transducteur d'ultrasons (20) est orientée de telle sorte que les signaux ultrasonores sont émis selon des angles d'émission (γ) et d'incidence (φ) égaux en valeur absolue et sont reçus après avoir parcouru le trajet de mesure (34, 432, 434, 436).

9. Dispositif selon l'une des revendications précédentes,
**caractérisé en ce que** l'unité de commande et d'évaluation (28) est conçue pour commander l'unité de transducteur d'ultrasons afin de faire suivre l'angle d'émission (γ) en fonction de la vitesse d'écoulement moyenne (v) du fluide (18).

10. Dispositif selon l'une des revendications précédentes,
**caractérisé en ce que**, pour au moins une section de trajet (34a-c), un rapport r/R est compris entre 0,3 et 0,65, R étant le rayon (R) de la conduite tubulaire (14) et r étant la distance la plus courte (r) de la section de trajet (34a-c) par rapport à l'axe central (26) de la conduite tubulaire (14).

11. Dispositif selon la revendication 10,
**caractérisé en ce qu'**au moins deux sections de trajet (34a-c) présentent un rapport r/R différent.

12. Procédé de mesure d'un débit d'un fluide (18) s'écoulant dans une conduite tubulaire (14), comprenant les étapes consistant à :

- émettre des signaux ultrasonores le long d'un trajet de mesure (24, 34, 64) dans la conduite tubulaire (14) au moyen d'une unité de transducteur d'ultrasons à réseau à commande de phases (20) commandée par une unité de commande et d'évaluation (28),
- recevoir, au moyen de la même unité de transducteur d'ultrasons (20), les signaux ultrasonores émis après qu'ils ont parcouru le trajet de mesure (24, 34, 64),
- évaluer les signaux ultrasonores reçus et déterminer un débit du fluide (18) en utilisant les temps de parcours des signaux ultrasonores au moyen de l'unité de commande et d'évaluation (28),
- les signaux ultrasonores émis par l'unité de transducteur d'ultrasons (20) étant réfléchis par au moins un réflecteur (30) en retour vers l'unité de transducteur d'ultrasons (20), les signaux ultrasonores parcourant le trajet de mesure (34, 432, 434, 436, 64) de l'unité de transducteur d'ultrasons (20) vers le réflecteur (30, 430, 50) et en retour vers l'unité de transducteur d'ultrasons (20) sur au moins trois sections de trajet différentes (34a-c, 432a-c, 434a-c, 436a-c, 64a-cc),

**caractérisé en ce que** le trajet de mesure (34, 432, 434, 436) est un trajet sécant ne passant pas diamétralement par un axe central (26) de la conduite tubulaire (14).

13. Procédé selon la revendication 12,
**caractérisé par** les étapes supplémentaires consistant à :

- émettre les signaux ultrasonores lors d'une première mesure de telle sorte que les signaux ultrasonores parcourent le trajet de mesure (34, 64) dans une première direction (34.1, 64.1) lors d'une première mesure de temps de parcours et dans une deuxième direction (34.2, 64.2), opposée à la première direction, lors d'une deuxième mesure de temps de parcours, et
- déterminer une vitesse d'écoulement moyenne (v) du fluide (18) à partir d'une différence entre la première et la deuxième mesure de temps de parcours.

Fig. 1

Fig. 2a

Fig. 2b

Fig. 3

Fig. 4

Fig. 5

**Fig. 6a**

**Fig. 6b**

**Fig. 6c**

Fig. 7

Fig. 8

**IN DER BESCHREIBUNG AUFGEFÜHRTE DOKUMENTE**

*Diese Liste der vom Anmelder aufgeführten Dokumente wurde ausschließlich zur Information des Lesers aufgenommen und ist nicht Bestandteil des europäischen Patentdokumentes. Sie wurde mit größter Sorgfalt zusammengestellt; das EPA übernimmt jedoch keinerlei Haftung für etwaige Fehler oder Auslassungen.*

**In der Beschreibung aufgeführte Patentdokumente**

- US 4467659 A
- DE 102013101950 A1
- EP 2103912 A1
- US 20150020608 A1

**In der Beschreibung aufgeführte Nicht-Patentliteratur**

- **KANG et al.** Two-dimensional flexural ultrasonic phased array for flow measurement. *2017 IEEE International Ultrasonics Symposium (IUS), Washington, DC, USA*, 06 September 2017
- *IEEE International: Ultrasonics Symposium (IUS)*, 2017, ISSN 1948-5727